# EUROPEAN PATENT SPECIFICATION

(11) **EP 3 144 175 B1**
(45) Date of publication and mention of the grant of the patent: **14.12.2022**
(21) Application number: 15306455.5
(22) Date of filing: 17.09.2015
(51) Int. Cl.: B60L 7/10, B60L 7/14, B60L 7/16, B60L 7/18, B60L 7/24, B60L 7/26, B60L 15/02, B60L 15/10, B60L 15/20, H02P 3/02, H02P 3/16, H02P 23/14, H02P 23/20

(54) **METHOD FOR CONTROLLING AN ELECTRIC VEHICLE, IN PARTICULAR A RAILWAY VEHICLE, CONTROL DEVICE FOR AN ELECTRIC VEHICLE, AND RAILWAY VEHICLE**
VERFAHREN ZUR STEUERUNG EINES ELEKTRISCHEN FAHRZEUGES, INSBESONDERE EINES SCHIENENFAHRZEUGES, STEUERUNGSVORRICHTUNG FÜR EIN ELEKTROFAHRZEUG UND SCHIENENFAHRZEUG
PROCÉDÉ DE COMMANDE D'UN VÉHICULE ÉLECTRIQUE, EN PARTICULIER UN VÉHICULE FERROVIAIRE, DISPOSITIF DE COMMANDE POUR UN VÉHICULE ÉLECTRIQUE ET VÉHICULE FERROVIAIRE

(43) Date of publication of application: 22.03.2017
(73) Proprietor: ALSTOM Transport Technologies, 93400 Saint-Ouen (FR)
(72) Inventor: DOLCINI, Andrea, 20026 NOVATE MILANESE (IT); MOIA, Piero, 20060 Truccazzano (IT)
(74) Representative: Lavoix

(56) References cited:
- EP-A1- 2 747 272
- EP-A1- 2 747 273
- WO-A1-2014/084009
- WO-A1-2015/001849
- JP-B2- 3 435 975
- US-A- 4 651 071
- US-A- 5 769 509
- US-A1- 2003 193 310
- US-A1- 2011 276 243
- US-A1- 2014 375 234
- US-A1- 2015 120 130
- US-A1- 2015 149 005

## Description

The present invention concerns a method for controlling a railway vehicle having a three phase electric machine for accelerating and/or decelerating the vehicle, the three phase electric machine includes a stator and a rotor.

Further, the present invention relates to a control device for a railway vehicle, having a three phase electric machine for accelerating and/or decelerating the vehicle, the three phase electric machine includes a stator and a rotor.

Finally, the present invention relates to a railway vehicle including such a control device.

WO 2014/084009 A1 relates to an electric motor control device for controlling a permanent magnet synchronous motor. The control device includes two current detectors and a position detector. The phase currents are converted into id and iq current using the position θ of the rotor.

US 2011/276243 A1 relates to a braking system being a combined system providing both regenerative and conventional braking with a friction brake. The input power and the output power of a motor is measured. The braking system includes a controller and one or more other controllers. The friction brakes and the regenerative braking units are controlled by the controller.

US2003193310 A1 relates to electric motors in hybrid vehicle applications. Two estimated torques are compared.

US4651071 A relates to a brake control system for a railway vehicle.

In railway vehicles, the electric machine is used to reduce the speed of the train. For, example, the electric machine is switched to a generator mode for that purpose. Then, the braking torque has to be estimated. Typically, lookup tables are used in which the torque values are stored in correspondence of current and speed pairs.

Object of the invention is to provide an improved system to estimate the torque, which has a high operational security and is economic.

The invention is defined in the appended claims.

According to an aspect, the method for controlling a railway vehicle according to claim 1 is provided.

Further embodiments may include the following features, which may be combined in any technical feasible combination:
- the current of the first phase and the current of the second phase of the three phase electric machine is measured with a first measurement device, in particular by a rogowsky coil;
- the estimated torque is calculated using the following equation: Cₑₘ= 3nₚ ((L_{d}-L_{q})I_{d}I_{q}+Φ₀I_{q}), where Cem is the estimated torque, np are the electric machine pair poles, L_{d} and L_{q} are the electric machine inductances in a rotating coordinate system rotating with the speed of the rotor of the electrical machine, I_{d}, I_{q} are the electric machine phase currents in the rotating coordinate system, and Φ₀ is the electric machine flux_{;}
- the current of the first phase and the current of the second phase is transformed, based on the angular position of the rotor, into electric machine currents in the rotating coordinate system;
- the electrical machine currents, in particular the electrical machine in the rotating coordinate system, are low pass filtered before determining the estimated torque.
- the electric machine is a permanent magnet electric machine.

According to a further aspect, a second controller for a railway vehicle is provided according to claim 7.

Further embodiments may include the following features:
According to another aspect, a railway vehicle having a three phase electric machine for accelerating and/or decelerating the railway vehicle, the three phase electric machine includes a stator and a rotor, wherein the railway vehicle includes a second controller according to an embodiment disclosed herein.

So that the manner in which the above recited features of the present invention can be understood in detail, a more particular description of the invention, briefly summarized above, may be read by reference to embodiments. The accompanying drawings relate to embodiments of the invention and are described in the following:
Figure 1 shows schematically a railway vehicle, according to an embodiment of the invention,
Figure 2 shows a flow chart of a method for controlling an electric vehicle according to an embodiment;
Figure 3 shows a flow chart for estimating the braking torque; and
Figure 4 shows several curves of the estimated torque with respect to the real torque and the vehicle and wheel speed.

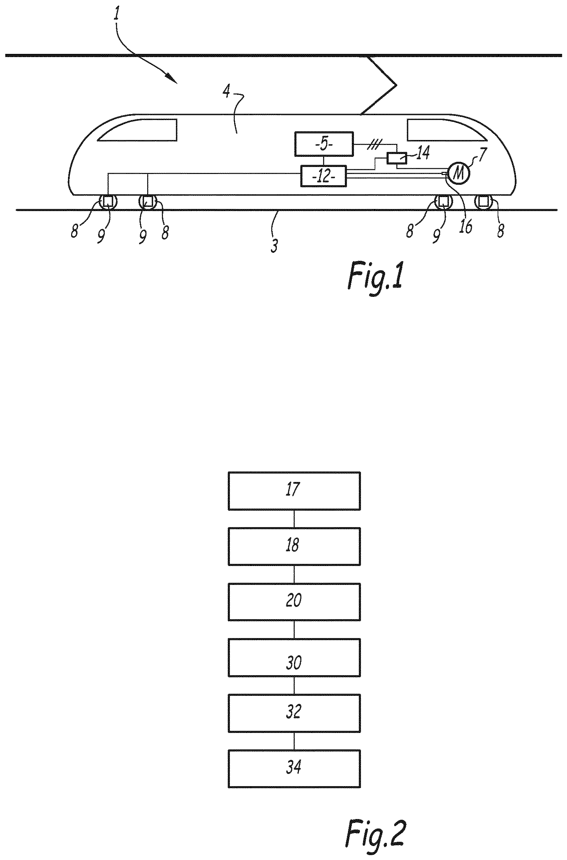

In Figure 1 shows an electric vehicle, in particular a railway vehicle 1. The railway vehicle 1 moves on a track 3 and comprises a body 4. The railway vehicle 1 includes a first controller 5, which controls the electric machine 7. The electric machine 7 can be operated in a motor mode and in a generator mode. In the motor mode, the railway vehicle 1 is accelerated. In the generator mode, the railway vehicle 1 is decelerated. In other words, the electric machine 7 works as an electro dynamical brake.

According to an embodiment, the electric machine 7 is a three phase permanent magnet electric machine. The electric machine 7 comprises a rotor, which is connectable or connected to wheels 8, and a stator with is stationary with respect to the body of the railway vehicle.

Further, the railway vehicle is provided with a plurality of friction brakes 9. The friction brakes (or mechanical brakes) 9 are adapted to decelerate the speed of the railway vehicle 1. For example, they may act directly on wheels 8 or axles (not shown) of the railway vehicle 1.

Further, the first controller 5 generally controls the speed of the railway vehicle 1 by using the electric machine 7, and the friction brakes 9. Further, the first controller is adapted to control the braking torque or generally the torque of the electric machine 7.

Further, the railway vehicle 1 also comprises a second controller 12. The second controller 12 is also adapted to estimate the braking torque of the railway vehicle 1. For example, the second controller 12 is used for a redundant braking torque estimation.

For that purpose the second controller 12 is connected to first measurement devices 14 for measuring the current in at least two phases of the electric machine 7. Further, the second controller 12 is connected to a second measurement device 16 for measuring the angle, the rotating speed or another value for determining the rotor position of the electric machine 7. For example the second measurement device 16 may be an optical sensor (encoder) or an electromagnetic sensor (resolver).

According to the some embodiments, the first controller 5 is adapted to provide to the second controller 12 a reference braking torque.

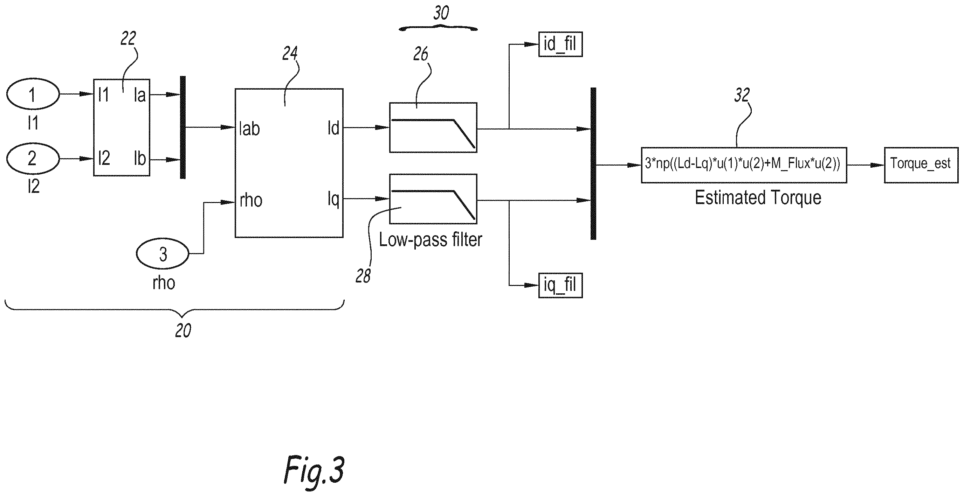

Figure 2 shows a flow chart of an embodiment of a method according to the invention and figure 3 shows a more detailed flow chart for estimating the braking torque, for example as performed by the second controller 12.

In a first step 17, at least two phase currents 11, 12 provided to or generated from the electric machine 7 are measured. For example, Rogowsky coils may be used for that purpose. Also other methods for measuring or determining the phase currents of the electric machine 7 may be used. In other embodiments, measurement values are provided to the second controller 12, that enable the second controller 12 to determine at least two phase currents 11, 12 of the three phase currents of the electric machine 7, in particular in case of stator with an isolated star point connection.

Further, in step 18, the angle of the rotor with respect stator of the electric machine 7 is determined. For example the second measurement device 16 is adapted to directly determine the angle p (rho) of the rotor with respect to the stator. In other embodiments, the measurement device 14 determines the rotational speed and provides it to the second controller 12. In other words, the measurement device 14 is adapted to provide a measurement value to the second controller 12 that enables the second controller to determine the angle p of the rotor with respect to the stator. According to an embodiment, the second controller 12 transforms the at least two phase currents 11, 12 and the angle p (rho) into the currents Id and Iq in step 20. The values or vectors for the currents I_{d} and I_{q}, which are orthogonal to each other, are rotating with the speed of the rotor. In other words, I_{d}, I_{q} are the electric machine phase currents in a rotating coordinate system rotating with the rotational speed of the rotor. I_{d} and I_{q} may be also called direct and quadrature currents. In other words, the second controller 12 is adapted to perform in step 20 a direct quadrature zero transformation.

In more detail, in a block 22, the phase currents 11, 12 are transformed to electric machine phase currents la, Ib in a fixed frame, for example using a park transformation. In an embodiment the third phase current 13 is also calculated in step 22 from the first and second phase currents 11, 12. In other, the first measurement device also measures the third phase current 13, so that a calculation of the third phase current can be avoided.

In block 24, the electric machine currents la, Ib are transformed into I_{d}, I_{q} on the basis of the stator angle p (rho).

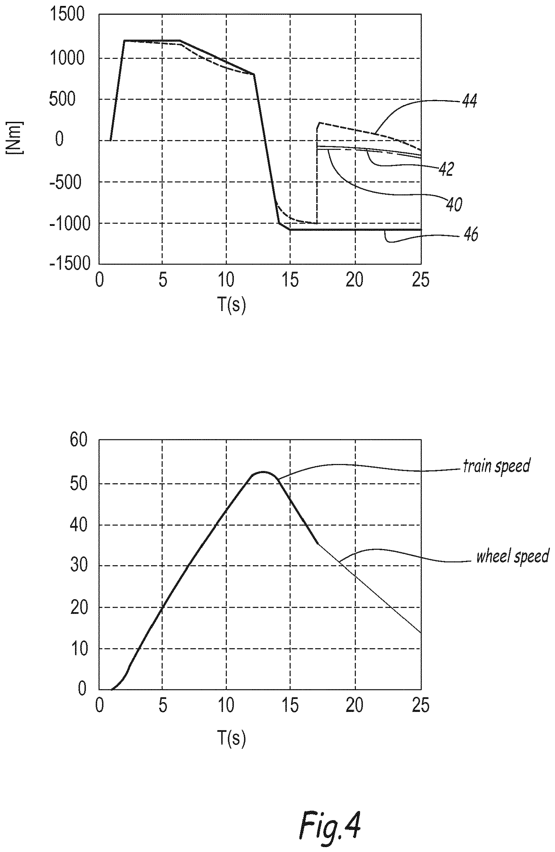

In blocks 26 and 28 or step 30 the electric currents of the electric machine in the rotating reference frame are filtered using a low-pass filter. For example the cutoff frequency is between 10 Hz and 50 Hz, in particular 10 Hz as shown in the embodiment of Fig. 4. In particular the low pass filters 26, 28 are provided primarily to reduce the ripple due to PWM commutations and secondarily to reduce the digital noise induced by quantization.

In block 32, the estimated torque is calculated based on the transformed and filtered currents I_{d}, I_{q} in the rotating frame. For example the following formula may be used for that purpose:
Cₑₘ= 3nₚ ((L_{d}-L_{q})I_{d}I_{q}+Φ₀I_{q}), where Cem is the estimated torque, nₚ are the electric machine pair poles, L_{d} and L_{q} are the electric machine inductances with respect to the rotating frame, I_{d}, I_{q} are the electric machine phase currents in a rotating coordinate system rotating with the rotational speed of the rotor and Φ₀ is the electric machine flux. In the equation of Figure 3 u(1) and u(2) corresponds to the filtered currents I_{d} and I_{q}.. In particular, L_{d} and L_{q} are the electric machine inductances in the d q system, in other words L_{d} and L_{q} are the direct and quadrature electric machine inductances.

In a further step 34, the estimated torque of the electrical machine 7 is compared with a reference (braking) torque, which is a demanded torque, from the first controller 5. For that purpose, the reference torque is provided from the first controller 5 to the second controller 12. In other embodiments, the second controller 12 provides the estimated (braking) torque of the electric machine 7 to the first controller 5.

In case there is a difference of more than 15 %, in particular of more than 20% between the reference torque and the estimated torque, the first or second controller 5, 12 activates the friction brakes 9. In other embodiments, the first or second controller 5, 12 will then energize a torque check relay, which is adapted to active the friction brakes 9. In other words, the estimated torque is compared with a torque range of the reference torque. Based on the comparison of the estimated torque and the reference torque, the friction brakes are activated.

In some embodiments, the allowed difference between the estimated torque and the reference torque is adjustable.

Figure 4 shows several curves, in particular the demand braking torque by the first controller 5 (curve 40), a curve 42 of the torque estimated by a more sophisticated torque estimator in the first controller 5, a curve 44 of the estimated torque according to the present invention, and curve 46 a reference torque. In the second graph, a train speed and a wheel speed is shown. As it can be seen, also a more simplified torque estimator can detect a torque failure.

The method and the second control device provide a simple and cost effective solution to estimate the torque of the electric machine 7. In other words, the evaluation of the torque of the electric machine neglects the evaluation of the fundamental frequency of an inverter of the railway vehicle and the compensation of the anti-aliasing filters on the phase currents, for example an angle compensation related to thereto. In other words, it is possible to realize a low sampling time and the usage of a low cost electronic board.

It should be noted that the control device and the method could not only be implemented for railway vehicles but also for other electric vehicles driving on a street like trolley buses.

## Claims

1. Method for controlling a railway vehicle having a three phase electric machine (7) for accelerating and/or decelerating the vehicle, the three phase electric machine includes a stator and a rotor, wherein the vehicle further includes at least one friction brake for decelerating the vehicle and a first controller (5) adapted to control the braking torque of the electric machine (7) and a second controller (12) adapted for a redundant braking torque estimation, the method comprising the following steps:
controlling the braking torque of the electric machine by the first controller (5),
determining a current (11) of a first phase of the three phase electric machine,
determining a current (12) of a second phase of the three phase electric machine,
determining the angular position (p) of the rotor,
determining, by the second controller (12), an estimated torque of the three phase electric machine based on the current of the first phase, the current of the second phase and the angular position of the rotor, and
controlling the electric vehicle based on the estimated torque comprising:
comparing the estimated torque with a reference torque provided by the first controller (5), wherein the reference torque is a demanded torque, and
activating the at least friction brake (9) if the estimated torque is above a predetermined deviation with respect to the reference torque.

2. Method according to claim 1, wherein the current of the first phase and the current of the second phase of the three phase electric machine is measured with a first measurement device (14), in particular by a rogowsky coil.

3. Method according to any one of the preceding claims, wherein the estimated torque is calculated using the following equation:
Cₑₘ= 3nₚ ((L_{d}-L_{q})I_{d}I_{q}+Φ₀I_{q}), where Cem is the estimated torque, np are the electric machine pair poles, L_{d} and L_{q} are the electric machine inductances in a rotating coordinate system rotating with the speed of the rotor of the electrical machine (7), I_{d}, I_{q} are the electric machine phase currents in the rotating coordinate system, and Φ₀ is the electric machine flux.

4. Method according to any one of the preceding claims, wherein the current of the first phase and the current of the second phase is transformed, based on the angular position of the rotor, into electric machine currents (I_{d}, I_{q}) in the rotating coordinate system.

5. Method according to any one of the preceding claims, wherein the electrical machine currents (I1, I2, I_{d}, I_{q}), in particular the electrical machine (I_{d}, I_{q}) in the rotating coordinate system, are low pass filtered before determining the estimated torque.

6. Method according to any one of the preceding claims, wherein the electric machine (7) is a permanent magnet electric machine.

7. A second controller (12) for a railway vehicle having a three phase electric machine (7) for accelerating and/or decelerating the vehicle, the three phase electric machine includes a stator and a rotor, wherein the vehicle further includes at least one friction brake for decelerating the vehicle and a first controller (5) adapted to control the braking torque of the electric machine (7), wherein the second controller is adapted for a redundant braking torque estimation, the second controller (12) being adapted to determine the current (11) of a first phase of the three phase electric machine, to determine the current (12) of a second phase of the three phase electric machine, to determine the angular position (p) of the rotor, and to determine an estimated torque of the three phase electric machine based on the current of the first phase, the current of the second phase and the angular position of the rotor, wherein the second controller (12) is further adapted to control the vehicle based on the estimated torque, wherein the second controller (12) is further adapted to compare the estimated torque with a reference torque provided by the first controller (5), wherein the reference torque is a demanded torque, and to activate the at least friction brake if the estimated torque is above a predetermined deviation with respect to the reference torque.

8. Railway vehicle (1) having a three phase electric machine for accelerating and/or decelerating the railway vehicle, the three phase electric machine includes a stator and a rotor, wherein the railway vehicle includes a second controller according to claim 7.

## Patentansprüche

1. Verfahren zum Steuern eines Schienenfahrzeugs, das eine dreiphasige elektrische Maschine (7) zum Beschleunigen und/oder Abbremsen des Fahrzeugs aufweist, wobei die dreiphasige elektrische Maschine einen Stator und einen Rotor beinhaltet, wobei das Fahrzeug ferner mindestens eine Reibungsbremse zum Abbremsen des Fahrzeugs und eine erste Steuerung (5), die angepasst ist, um das Bremsmoment der elektrischen Maschine (7) zu steuern, und eine zweite Steuerung (12), die für eine redundante Bremsmomentschätzung angepasst ist, beinhaltet, das Verfahren umfassend die folgenden Schritte:
Steuern des Bremsmoments der elektrischen Maschine durch die erste Steuerung (5),
Bestimmen eines Stroms (I1) einer ersten Phase der dreiphasigen elektrischen Maschine,
Bestimmen eines Stroms (I2) einer zweiten Phase der dreiphasigen elektrischen Maschine,
Bestimmen der Winkelposition (p) des Rotors,
Bestimmen, durch die zweite Steuerung (12), eines geschätzten Drehmoments der dreiphasigen elektrischen Maschine basierend auf dem Strom der ersten Phase, dem Strom der zweiten Phase und der Winkelposition des Rotors, und
Steuern des Elektrofahrzeugs auf der Grundlage des geschätzten Drehmoments, umfassend:
Vergleichen des geschätzten Drehmoments mit einem von der ersten Steuerung (5) bereitgestellten Referenzdrehmoment, wobei das Referenzdrehmoment ein gefordertes Drehmoment ist, und
Aktivieren zumindest der Reibungsbremse (9), wenn das geschätzte Drehmoment über einer vorbestimmten Abweichung in Bezug auf das Referenzmoment ist.

2. Verfahren nach Anspruch 1, wobei der Strom der ersten Phase und der Strom der zweiten Phase der dreiphasigen elektrischen Maschine mit einer ersten Messeinrichtung (14), insbesondere durch eine Rogowsky-Spule, gemessen wird.

3. Verfahren nach einem der vorherigen Ansprüche, wobei das geschätzte Drehmoment unter Verwendung der folgenden Gleichung berechnet wird:
Cₑₘ= 3nₚ ((L_{d}-L_{q})I_{d}I_{q}+ΦₒI_{q}), wobei Cₑₘ das geschätzte Drehmoment ist, np die Paarpole der elektrischen Maschine sind, L_{d} und L_{q} die Induktivitäten der elektrischen Maschine in einem drehenden Koordinatensystem sind, das mit der Drehzahl des Rotors der elektrischen Maschine (7) dreht, I_{d}, I_{q} die Phasenströme der elektrischen Maschine in dem drehenden Koordinatensystem sind und Φₒ der Fluss der elektrischen Maschine ist.

4. Verfahren nach einem der vorherigen Ansprüche, wobei der Strom der ersten Phase und der Strom der zweiten Phase basierend auf der Winkelposition des Rotors in elektrische Maschinenströme (I_{d}, I_{q}) in dem drehenden Koordinatensystem transformiert werden.

5. Verfahren nach einem der vorherigen Ansprüche, wobei die elektrischen Maschinenströme (I1, I2, I_{d}, I_{q}), insbesondere die elektrische Maschine (I_{d}, I_{q}) in dem drehenden Koordinatensystem, vor Bestimmen des geschätzten Drehmoments tiefpassgefiltert werden.

6. Verfahren nach einem der vorherigen Ansprüche, wobei die elektrische Maschine (7) eine elektrische Permanentmagnet-Maschine ist.

7. Zweite Steuerung (12) für ein Schienenfahrzeug, das eine dreiphasige elektrische Maschine (7) zum Beschleunigen und/oder Abbremsen des Fahrzeugs aufweist, wobei die dreiphasige elektrische Maschine einen Stator und einen Rotor beinhaltet, wobei das Fahrzeug ferner mindestens eine Reibungsbremse zum Abbremsen des Fahrzeugs und eine erste Steuerung (5), die angepasst ist, um das Bremsmoment der elektrischen Maschine (7) zu steuern, wobei die zweite Steuerung für eine redundante Bremsmomentabschätzung angepasst ist, wobei die zweite Steuerung (12) angepasst ist, um den Strom (I1) einer ersten Phase der dreiphasigen elektrischen Maschine zu bestimmen, den Strom (I2) einer zweiten Phase der dreiphasigen elektrischen Maschine zu bestimmen, die Winkelposition (p) des Rotors zu bestimmen und ein geschätztes Drehmoment der dreiphasigen elektrischen Maschine basierend auf dem Strom der ersten Phase, dem Strom der zweiten Phase und der Winkelposition des Rotors zu bestimmen, wobei die zweite Steuerung (12) ferner angepasst ist, um das Fahrzeug basierend auf dem geschätzten Drehmoment zu steuern, wobei die zweite Steuereinheit (12) ferner angepasst ist, um das geschätzte Drehmoment mit einem von der ersten Steuerung (5) bereitgestellten Referenzdrehmoment zu vergleichen, wobei das Referenzdrehmoment ein gefordertes Drehmoment ist, und die zumindest eine Reibungsbremse zu aktivieren, wenn das geschätzte Drehmoment über einer vorbestimmten Abweichung in Bezug auf das Referenzdrehmoment ist.

8. Schienenfahrzeug (1), das eine dreiphasige elektrische Maschine zum Beschleunigen und/oder Abbremsen des Schienenfahrzeugs aufweist, wobei die dreiphasige elektrische Maschine einen Stator und einen Rotor beinhaltet, wobei das Schienenfahrzeug eine zweite Steuerung nach Anspruch 7 beinhaltet.

## Revendications

1. - Procédé de commande d'un véhicule ferroviaire ayant une machine électrique triphasée (7) pour accélérer et/ou décélérer le véhicule, la machine électrique triphasée comprend un stator et un rotor, dans lequel le véhicule comprend en outre au moins un frein à friction pour décélérer le véhicule et un premier dispositif de commande (5) adapté pour commander le couple de freinage de la machine électrique (7) et un second dispositif de commande (12) adapté pour une estimation redondante du couple de freinage, le procédé comprenant les étapes suivantes :
commander le couple de freinage de la machine électrique par le premier dispositif de commande (5),
déterminer un courant (I1) d'une première phase de la machine électrique triphasée,
déterminer un courant (I2) d'une deuxième phase de la machine électrique triphasée,
déterminer la position angulaire (p) du rotor,
déterminer, par le second dispositif de commande (12), un couple estimé de la machine électrique triphasée sur la base du courant de la première phase, du courant de la deuxième phase et de la position angulaire du rotor, et
commander le véhicule électrique sur la base du couple estimé comprenant :
la comparaison du couple estimé à un couple de référence fourni par le premier dispositif de commande (5), dans lequel le couple de référence est un couple demandé, et
activer le au moins un frein à friction (9) si le couple estimé est supérieur à un écart prédéterminé par rapport au couple de référence.

2. - Procédé selon la revendication 1, dans lequel le courant de la première phase et le courant de la deuxième phase de la machine électrique triphasée sont mesurés avec un premier dispositif de mesure (14), notamment par une bobine de Rogowsky.

3. Procédé selon l'une quelconque des revendications précédentes, dans lequel le couple estimé est calculé en utilisant l'équation suivante :
Cₑₘ= 3nₚ ((L_{d}-L_{q})I_{d}I_{q}+ΦₒI_{q}), où Cₑₘ est le couple estimé, np sont les paires de pôles de la machine électrique, L_{d} et L_{q} sont les inductances de la machine électrique dans un système de coordonnées tournant avec la vitesse du rotor de la machine électrique (7), I_{d}, I_{q} sont les courants de phase de la machine électrique dans le système de coordonnées tournant, et Φₒest le flux de la machine électrique.

4. - Procédé selon l'une quelconque des revendications précédentes, dans lequel le courant de la première phase et le courant de la deuxième phase sont transformés, en fonction de la position angulaire du rotor, en courants de machine électrique (I_{d}, I_{q}) dans le système de coordonnées tournant.

5. - Procédé selon l'une quelconque des revendications précédentes, dans lequel les courants de la machine électrique (I1, I2, I_{d}, I_{q}), notamment la machine électrique (I_{d}, I_{q}) dans le système de coordonnées tournant, sont filtrés en passe-bas avant de déterminer le couple estimé.

6. - Procédé selon l'une quelconque des revendications précédentes, dans lequel la machine électrique (7) est une machine électrique à aimant permanent.

7. - Second dispositif de commande (12) pour un véhicule ferroviaire ayant une machine électrique triphasée (7) pour accélérer et/ou décélérer le véhicule, la machine électrique triphasée comprend un stator et un rotor, dans lequel le véhicule comprend en outre au moins un frein à friction pour décélérer le véhicule et un premier dispositif de commande (5) adapté pour commander le couple de freinage de la machine électrique (7), dans lequel le second dispositif de commande est adapté pour une estimation redondante du couple de freinage, le second dispositif de commande (12) étant adapté pour déterminer le courant (I1) d'une première phase de la machine électrique triphasée, pour déterminer le courant (I2) d'une seconde phase de la machine électrique triphasée, pour déterminer la position angulaire (p) du rotor, et pour déterminer un couple estimé de la machine électrique triphasée sur la base du courant de la première phase, du courant de la seconde phase et de la position angulaire du rotor, dans lequel le second dispositif de commande (12) est en outre adapté pour commander le véhicule sur la base du couple estimé, dans lequel le second dispositif de commande (12) est en outre adapté pour comparer le couple estimé à un couple de référence fourni par le premier dispositif de commande (5), dans lequel le couple de référence est un couple demandé, et pour activer le au moins un frein à friction si le couple estimé est supérieur à un écart prédéterminé par rapport au couple de référence.

8. - Véhicule ferroviaire (1) ayant une machine électrique triphasée pour accélérer et/ou décélérer le véhicule ferroviaire, la machine électrique triphasée comprend un stator et un rotor, dans lequel le véhicule ferroviaire comprend un second dispositif de commande selon la revendication 7.
